# EUROPEAN PATENT SPECIFICATION

(11) **EP 1 620 954 B1**
(45) Date of publication and mention of the grant of the patent: **31.10.2007**
(21) Application number: 04759795.0
(22) Date of filing: 06.04.2004
(51) Int. Cl.: G01S 5/02

(54) **METHOD AND SYSTEM FOR MANAGING COOPERATIVE POSITIONING AMONG WIRELESS TRANSMIT/RECEIVE UNITS**
VERFAHREN UND SYSTEM ZUR VERWALTUNG DER KOOPERATIVEN POSITIONIERUNG ZWISCHEN DRAHTLOSEN SENDE-/EMPFANGSEINHEITEN
PROCEDE ET SYSTEME POUR GERER LE POSITIONNEMENT COOPERATIF ENTRE DES UNITES D'EMISSION/RECEPTION HERTZIENNES

(30) Priority: 22.04.2003 US 464670 P; 05.12.2003 US 729644
(43) Date of publication of application: 01.02.2006
(60) Divisional application: 07115875.2
(73) Proprietor: INTERDIGITAL TECHNOLOGY CORPORATION, Wilmington, DE 19801 (US)
(72) Inventor: MARINIER, Paul, Brossard, Québec J4X 2J7 (CA)
(74) Representative: Pierrou, Mattias
(86) International application number: PCT/US2004/010473
(87) International publication number: WO 2004/095714

(56) References cited:
- EP-A- 1 229 343
- GB-A- 2 387 072
- US-A- 3 714 573
- US-A1- 2002 122 003
- US-B1- 6 169 497
- US-B1- 6 198 935
- US-B1- 6 546 257
- EUROMEDIA'2003. EIGHTH ANNUAL CONFERENCE ON WEB TECHNOLOGY, NEW MEDIA COMMUNICATIONS AND TELEMATICS THEORY METHODS, TOOLS AND APPLICATIONS 14-16 APRIL 2003 PLYMOUTH, UK, 16 April 2003 (2003-04-16), pages 191-194, XP001246646 EUROMEDIA'2003. Eighth Annual Scientific Conference on Web Technology, New Media Communications and Telematics Theory Methods, Tools and Applications EUROSIS Ghent, Belgium

## Description

### [0002] FIELD OF INVENTION

The present invention generally relates to wireless communication systems. More particularly, the present invention relates to wireless communication systems wherein wireless transmit/receive units may be used for obtaining positioning information regarding target wireless transmit/receive units.

### [0004] BACKGROUND OF THE INVENTION

Wireless communication systems wherein wireless transmit/receive units (WTRUs) are capable of providing positioning information by measuring and reporting characteristics (i.e., angle of arrival, propagation delay, received power, etc.) of signals transmitted from target-WTRUs (i.e. WTRUs for which a position needs to be calculated) are known in the art. Such functionality is referred to as cooperative positioning and enables WTRUs to assist each other in positioning themselves. Further information regarding positioning among WTRUs is provided in U.S. patent application nos. 10/308,476 and 10/334,806, both of which are assigned to the assignee of this application.

The prior art, however, fails to address the issues of which WTRUs to select as candidates for requesting cooperation with respect to providing positioning information, how to request such cooperation, and how to encourage users to cooperate. These issues are preferably addressed because in practice, a large percentage of registered users have WTRUs that are incapable of providing any useful positioning information as a result of, for example, their own unfavorable position. Further, performing positioning measurements regarding target-WTRUs detracts from the end-user experience for the users of WTRUs performing positioning measurements. For example, performing positioning measurements regarding target-WTRUs results in increased battery consumption in the WTRUs performing the measurements.

In light of the above, it would be desirable to provide a method and system for managing cooperative positioning among WTRUs in wireless communication systems.

### [0008] SUMMARY

The present invention is a method and system wherein users are encouraged to participate in cooperative positioning among wireless transmit/receive units (WTRUs). Participating WTRUs determined to be suitable for providing positioning information for target-WTRUs are identified and sent a broadcast message requesting positioning information regarding a target-WTRU(s). Participating WTRUs that report positioning information are given a reward or credit.

Euromedia 2003, Eighth Annual Scientific Conference on Web Technology, pages 191-194, "WLAN Hierachical Cooperative Positioning" discloses cooperative positioning in a wireless Local Area Network.

EP 1 229 343 discloses a system and method for determining the location of a mobile by means of receivers on nearby vehicles.

### [0010] BRIEF DESCRIPTION OF THE DRAWINGS

Figure 1 is a method wherein users may opt to allow their wireless transmit/receive units to provide positioning information regarding target wireless transmit/receive units in return for credit.

Figure 2 is a method for managing user cooperation and network collection of positioning information from well-located wireless transmit/receive units in a wireless communication network.

Figure 3 is a system wherein users are encouraged to allow wireless networks to utilize the user's wireless transmit/receive units to obtain positioning information regarding target wireless transmit/receive units where additional positioning measurements are desired.

### [0014] DETAILED DESCRIPTION OF THE PREFERRED EMBODIMENTS

The present invention is described with reference to the drawing figures wherein like numerals represent like elements throughout.

Generally, the term base station includes but is not limited to a Node-B, site controller, access point or other interfacing device in a wireless environment. The term WTRU includes but is not limited to a user equipment, mobile station, fixed or mobile subscriber unit, pager, or any other type of device capable of operating in a wireless environment. Further, the phrases wireless communication system and wireless communication network are used interchangeably herein.

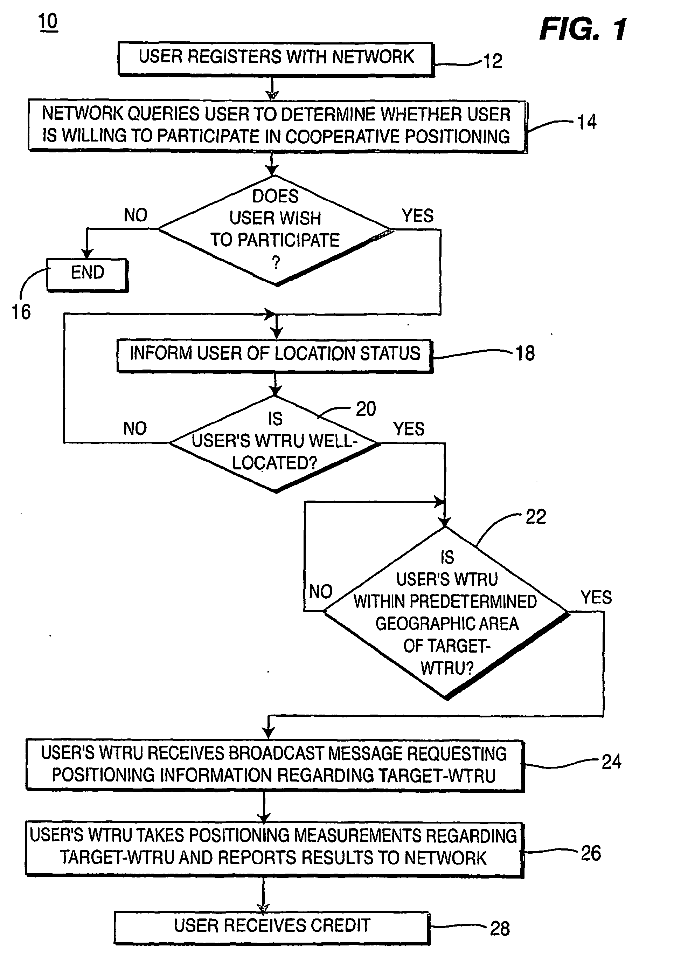

Referring initially to Figure 1, there is shown a method 10 wherein users may opt to allow their wireless transmit/receive units (WTRUs) to provide positioning information regarding target-WTRUs (i.e. WTRUs for which a position needs to be calculated) in return for credit. In general, specific WTRUs are selected from a group of WTRUs that have been made available by their respective users to a wireless network for providing positioning information regarding tar get-WTRUs. The users whose WTRUs actually perform a positioning measurement regarding a target-WTR,U(s) and report the information obtained as a result of taking the measurement to the network are provided with a reward or credit.

The method 10 preferably begins in step 12 when a user registers with a wireless network. Upon registration to the network, the network queries the user in step 14 to determine whether the user is willing to participate in cooperative positioning. Cooperative positioning is where a wireless network instructs certain WTRUs to provide positioning information regarding target-WTRUs. The selected WTRUs will take positioning measurements (i.e. angle of arrival, propagation delay, received power, etc.) of signals transmitted from a target-WTRU(s) and report the results of the measurements to the network for use in locating the target-WTRU(s). Therefore, to participate in cooperative positioning, users must be willing to allow their WTRUs to be used by the network to perform position measurements in order to obtain positioning information regarding target-WTRUs. It should be noted that the user's selection may be cached by the network so that users are not queried each time they turn on their WTRU.

If the user does not wish to participate, the method 10 ends (step 16). If the user does wish to participate, the method 10 continues in step 18. In step 18, the network informs the user of the location status of its WTRU. That is, the network informs the user of whether the user's WTRU is well-located or not well-located. The determination of whether a WTRU is well-located or not is preferably based on the WTRU's reported degree of confidence in its own position.

The WTRUs participating in cooperative positioning may position themselves according to any known positioning method (i.e. using cooperative positioning, the global positioning system (GPS), measurements from base stations, etc.). The WTRUs, however, have to be well-located. A WTRU is well-located where its degree of confidence in its own position is equal to or greater than a predetermined value and non well-located where its degree of confidence is less than the predetermined value. Of course, the determination of whether a WTRU is well-located or not may be determined based on any criteria as desired.

Referring now to step 20, if the location status of the WTRU is not well-located, the method 10 returns to step 18 and may cycle between steps 18 and 20 until the location status of the user's WTRU changes from not well-located to well-located. If the user's WTRU is (or becomes) well-located, the method 10 proceeds from step 20 to step 22. In step 22, it is determined whether the user's WTRU is within a predetermined geographic area of the target-WTRU. The predetermined geographic area may be selected as desired.

If the user's WTRU is not within the predetermined geographic area, the determination in step 22 may be performed periodically with a predetermined delay, as desired. If the user's WTRU is within the predetermined geographic area, the method 10 proceeds to step 24 wherein well-located WTRUs within the predetermined geographic area receive a message from the network requesting positioning information regarding a target-WTRU(s). The message is preferably broadcast, but may of course be transmitted as desired. The broadcast message identifies the target-WTRU(s) and the measurements that should be taken.

To identify the target-WTRU(s), the broadcast preferably includes information that is specific to the target-WTRU(s) (i.e. spreading code or other unique signature) and is transmitted over a set of cells including the target-WTRU's serving cell and neighboring cells. Restricting the broadcast to well-located WTRUs within the predetermined area will considerably limit the set of WTRUs responding to the request for positioning information. If desired, further reduction in the number of responding WTRUs may be achieved by allowing a response to the network only where the confidence of the measurements is above a predetermined threshold. In step 26, the user's WTRU provides positioning information to the network (i.e. takes positioning measurements regarding the tar get-WTRU and reports the results to the network). Then, in step 28, each user that provides positioning information (i.e. results of positioning measurements) regarding the target-WTRU is provided with a credit. The credit may be an actual monetary credit on the user's network account or it may be in the form of free air time on the network. The particular credit that is provided may be any type of reward. For example, frequent flier miles or free meals or any other type of incentive may be provided as desired. The positioning information provided to the network is preferably used to locate the target-WTRU(s).

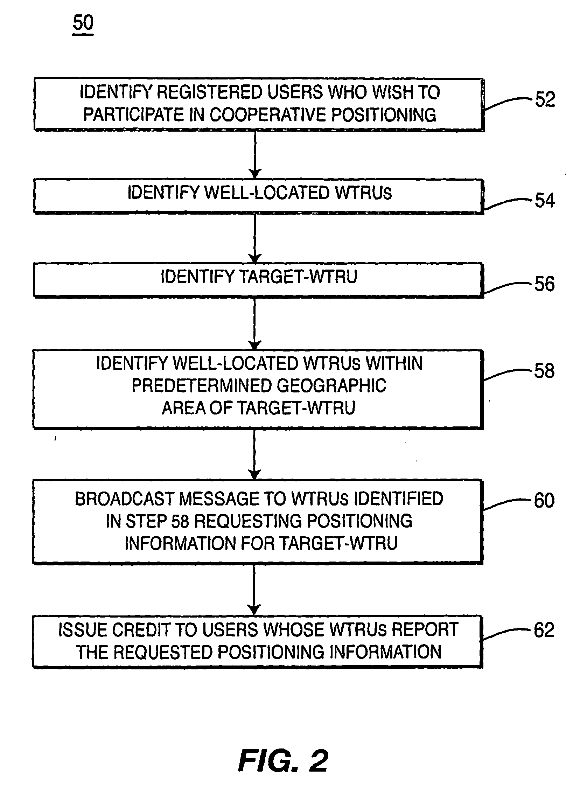

Referring now to Figure 2, a method 50 for managing user cooperation and network collection of positioning information from WTRUs in a wireless communication network is shown. The method 50 begins in step 52 wherein registered users who wish to participate in cooperative positioning are identified by a wireless network. As explained above, a large number of identified users may have WTRUs that are themselves not well-located. WTRUs that are not well-located should not be used to obtain positioning information regarding target-WTRUs. Therefore, in step 54, the well-located WTRUs are identified. Next, in step 56, the target-WTRU(s) is identified.

In this embodiment, once the well-located WTRUs and target-WTRU(s) are identified, the well-located WTRUs within a predetermined geographic area of the target-WTRU(s) are identified (step 58) and sent a broadcast message (step 60). As explained above, the broadcast message requests that positioning information regarding the target-WTRU(s) be provided to the network. In step 62, the users whose WTRU's report the requested positioning information are issued a credit.

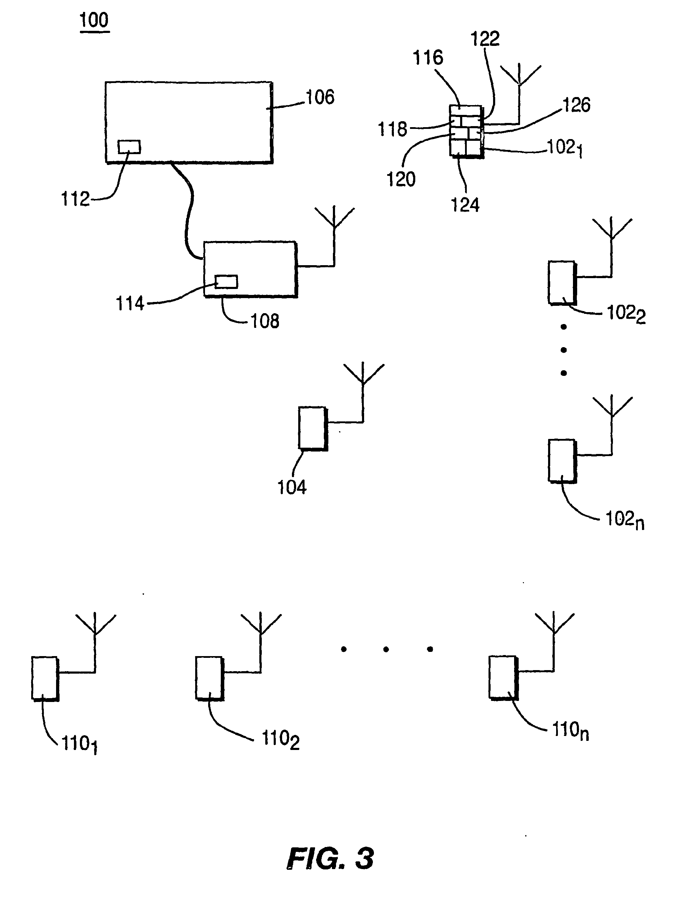

Referring now to Figure 3, a wireless system 100 is shown. The system 100 encourages users to cooperate with the system so that WTRUs 102₁-102ₙ belonging to users who have opted to cooperate may be used by the system 100 to obtain positioning information regarding a target-WTRU 104. In addition to WTRUs 102₁-102ₙ and target-WTRU 104, the system 100 includes a radio network controller (RNC) 106, at least one base station 108, and WTRUs 110₁-110ₙ who, for example, have opted not to participate in cooperative positioning or who have yet to be asked.

It should be noted that the components described in connection with Figure 3 will, of course, vary depending upon the type of system in which the present invention is being implemented. For example, where the wireless system 100 is a wireless local area network (WLAN) type wireless system, a wired computer network and at least one access point may be provided in conjunction with or instead of the RNC 106 and at least one base station 108. Therefore, it is important to note that while a cellular type system 100 is shown, system 100 may be any type of wireless system.

In this embodiment, when a target-WTRU 104 needs to be located, the RNC 106 will send a broadcast message to WTRUs within the group of WTRUs 102₁-102ₙ that are well-located and within a predetermined geographic area of the target-WTRU 104. The broadcast message includes information identifying target-WTRU 104 and requests positioning information regarding target-WTRU 104. The positioning information that is accepted by the network is preferably reported with a degree of confidence above a predetermined level.

The location of WTRUs whose users have opted to participate in cooperative positioning as well as their status as well-located or non well-located may be stored in memory 112 in the RNC 106 or in memory 114 in base station 108. Therefore, when positioning information is needed where, for example, target-WTRU 104 is a new WTRU which has just come online, the system 100 can quickly determine which WTRUs out of WTRUs 102₁-102ₙ can provide positioning information that would be helpful in accurately positioning target-WTRU 104. Once such WTRUs are identified, the RNC 106 broadcasts a message via base station 108 wherein well-located WTRUs within a predetermined area of target-WTRU 104 are instructed to report positioning information on target-WTRU 104.

Positioning information provided by WTRUs 102₁-102ₙ is preferably only provided where it can be reported with a sufficient degree of confidence. That is, for positioning information to actually be used in the positioning of target-WTRU 104, it is preferable such information to be reported with a degree of confidence that is equal to or above a predetermined level.

WTRUs 102₁-102ₙ include a receiver 116 configured to receive the requests for positioning information regarding target-WTRUs that are transmitted by the system 100. The receiver 116 is also configured to receive signals from target-WTRUs because positioning measurements regarding target-WTRUs often involve performing measurements not only on signals received from system 100 components such as base station 108, but also from target-WTRUs and measuring an angle between the two received signals.

WTRUs 102₁-102ₙ include at least one processor 118 for performing the requested position measurements based on signals received for purposes of performing the position measurements. WTRUs 102₁-102ₙ also include a transmitter 120 that is configured to transmit results of position measurements (i.e. positioning information) to the system 100. Further, a memory 122 and display 124 is provided in WTRUs 102₁-102ₙ so that WTRUs 102₁-102ₙ may store and display the number of instances where the user's WTRU has provided positioning information to the system 100. The ability to store and display such information assists users in tracking the amount of resources expended as a result of participating in cooperative positioning as well as the amount of credits that are due to the user.

To enable registered users who have opted to participate in cooperative positioning to control the time periods wherein their WTRU is available to the network for purposes of cooperative positioning, WTRUs 102₁-102ₙ preferably include a switch 126. The switch 126 allows users to enable and disable their WTRU's ability to respond to system 100 positioning requests. For example, where a user's WTRU is low on power, the user may wish to disable his WTRU's ability to respond to system 100 positioning requests.

It is important to note that the present invention may be implemented in any type of wireless communication system, as desired. By way of example, the present invention may be implemented in UMTS-FDD, UMTS-TDD, TDSCDMA, CDMA2000 (EV-DO and EV-DV), any type of wireless local area network (WLAN), or any other type of wireless communication system. Further, while the present invention has been described in terms of various embodiments, other variations, which are within the scope of the invention as outlined in the claim below will be apparent to those skilled in the art.

## Claims

1. A method for managing cooperative positioning among wireless transmit/receive units (102₁-102ₙ), WTRUs, in a wireless communication system (100), the method comprising the steps of:
identifying users registered with the system that are willing to participate in cooperative positioning;
identifying at least one target-WTRU (104);
**characterised by** the steps of:
identifying willing users having a WTRU that is well-located and within a predetermined geographic area of the target-WTRU (104);
transmitting from the wireless communication system (100) a message to well-located WTRUs within a predetermined geographic area of the target-WTRU (104) wherein the message requests the well-located WTRUs to provide positioning information regarding the target-WTRU (104) to the wireless communication system (100); and
crediting users whose WTRUs provide the requested positioning information regarding the target-WTRU (104).

2. The method of claim 1 wherein the wireless communication system (100) is a code division multiple access, CDMA, system and wherein the message is broadcast and includes the spreading code of the target-WTRU (104).

3. The method of claim 1 wherein a WTRU is well-located where the WTRU has determined its own position with a degree of confidence that is above a predetermined value.

4. The method of claim 1 further comprising the step of:
calculating the position of the target-WTRU (104) using the positioning information provided to the wireless communication system (100).

5. The method of claim 1 wherein the positioning information accepted by the systems (100) limited to positioning information reported to the system (100) with a degree of confidence above a predetermined level.

6. A wireless transmit/receive unit, WTRU, **characterized in that** it comprises:
a receiver (116) configured to receive requests for positioning information regarding a selected target-WTRU (104) from a wireless communication network (100) and to receive signals from the selected target-WTRU (104) in response to the received requests;
a processor (118) configured to perform position measurements regarding the target-WTRU (104) based on signals received from the target-WTRU (104) for purposes of performing the position measurements;
a transmitter configured to transmit results of position measurements regarding the target-WTRU (104) to the wireless network (100); and
a memory (122) for storing the number of instances where positioning information is provided to the system.

7. The WTRU of claim 6 further including a switch (126) for enabling and disabling the ability of said WTRU to respond to positioning requests received from the system.

8. The WTRU of claim 6 further including a displaying (124) for displaying the number of instances where positioning information is provided to the system.

## Patentansprüche

1. Verfahren zur Verwaltung der kooperativen Positionierung zwischen drahtlosen Sende/Empfangseinheiten WTRUs (102₁ - 102ₙ) in einem drahtlosen Kommunikationssystem (100), wobei das Verfahren die folgenden Schritte aufweist:
Identifizieren von Benutzern, die in dem System registriert sind, die bereit sind, an der kooperativen Positionierung teilzunehmen;
Identifizieren zumindest einer Ziel-WTRU (104);
**gekennzeichnet durch** die Schritte:
Identifizieren bereiter Benutzer mit einer WTRU, die gut geortet und innerhalb eines vorbestimmten geographischen Bereichs der Ziel-WTRU (104) sind;
Senden einer Nachricht von dem drahtlosen Kommunikationssystem (100) an gut geortete WTRUs innerhalb eines vorbestimmten geographischen Bereichs der Ziel-WTRU (104), wobei die Nachricht die gut georteten WTRUs auffordert, Positionierungsinformationen bezüglich der Ziel-WTRU (104) an das drahtloses Kommunikationssystem (100) bereitzustellen;
Gewähren einer Gutschrift für Benutzer, deren WTRUs die angeforderte Positionierungsinformation bezüglich der Ziel-WTRU (104) bereitstellen.

2. Verfahren nach Anspruch 1, wobei das drahtlose Kommunikationssystem (100) ein Codemultiplex-Vielfachzugriffsystem, CDMA-System, ist, wobei die Nachricht als Rundruf gesendet wird und den Spreizcode der Ziel-WTRU (104) enthält.

3. Verfahren nach Anspruch 1, wobei eine WTRU gut geortet ist, wenn die WTRU ihre eigene Position mit einem Vertrauensniveau bestimmt hat, das über einem vorbestimmten Wert liegt.

4. Verfahren nach Anspruch 1, das ferner den Schritt aufweist:
Berechnen der Position der Ziel-WTRU (104) unter Verwendung der dem drahtlosen Kommunikationssystem (100) bereitgestellten Positionierungsinformation.

5. Verfahren nach Anspruch 1, wobei die von dem System (100) akzeptierte Positionierungsinformation auf Positionierungsinformation beschränkt ist, die dem System (100) mit einem Vertrauensniveau über einem vorbestimmten Vertrauensniveau gemeldet wird.

6. Drahtlose Sende/Empfangseinheit WTRU, die **dadurch gekennzeichnet ist, daß** sie aufweist:
einen Empfänger (16), der konfiguriert ist, Anforderungen nach Positionierungsinformation bezüglich einer ausgewählten Ziel-WTRU (104) von einem drahtlosen Kommunikationsnetzwerk (100) zu empfangen und ansprechend auf die empfangenen Anforderungen Signale von der ausgewählten Ziel-WTRU (104) zu empfangen;
einen Prozessor (108), der konfiguriert ist, Positionsmessungen bezüglich der Ziel-WTRU (104) basierend auf Signalen zu machen, die von der ziel-WTRU (104) zu Zwecken der Durchführung von Positionsmessungen empfangen werden;
einen Sender, der konfiguriert ist, Positionsmessergebnisse bezüglich der Ziel-WTRU (104) zu dem drahtlosen Netzwerk zu senden; und
einen Speicher (122) zum Speichern der Anzahl von Fällen, in denen Positionierungsinformation an das System bereitgestellt wird.

7. WTRU nach Anspruch 6, die ferner einen Schalter (126) umfaßt, um die Fähigkeit der WTRU, auf von dem System empfangene Positionierungsanfragen zu antworten, aktiviert und deaktiviert.

8. WTRU nach Anspruch 6, die ferner eine Anzeige (124) zum Anzeigen der Anzahl von Fällen, in denen Positionierungsinformation an das System bereitgestellt wird, umfaßt.

## Revendications

1. Procédé de gestion de positionnements coopératifs parmi des unités d'émission/de réception sans fil (102,-102n), des WTRU, dans un système de communication sans fil (100), le procédé comprenant les étapes consistant à :
identifier des utilisateurs enregistrés avec le système qui souhaitent participer au positionnement coopératif ;
identifier au moins une WTRU cible (104) ;
**caractérisé par** les étapes consistant à :
identifier des utilisateurs désireux disposant d'une WTRU qui est située de manière correcte et dans une zone géographique prédéterminée de la WTRU cible (104) ;
émettre à partir du système de communication sans fil (100) un message vers les WTRU situées de manière correcte dans une zone géographique prédéterminée de la WTRU cible (104) dans lequel le message demande aux WTRU situées de manière correcte de fournir des informations de positionnement relatives à la WTRU cible (104) au système de communication sans fil (100) ; et
créditer les utilisateurs dont les WTRU fournissent les informations de positionnement demandées relatives à la WTRU cible (104).

2. Procédé selon la revendication 1 dans lequel le système de communication sans fil (100) est un système d'accès multiple par répartition en code, CDMA, et dans lequel le message est diffusé et comprend le code d'étalement de la WTRU cible (104).

3. Procédé selon la revendication 1 dans lequel la WTRU est située de manière correcte où la WTRU a déterminé sa propre position avec un niveau de confiance qui est supérieur à une valeur prédéterminée.

4. Procédé selon la revendication 1 comprenant en outre l'étape consistant à :
calculer la position de la WTRU cible (104) à l'aide des informations de positionnement fournies au système de communication sans fil (100).

5. Procédé selon la revendication 1 dans lequel les informations de positionnement acceptées par le système (100) sont limitées aux informations de positionnement rapportées au système (100) selon un niveau de confiance supérieur à un niveau prédéterminé.

6. Unité d'émission/de réception sans fil, WTRU, **caractérisée en ce qu'**elle comprend :
un récepteur (116) configuré pour recevoir des demandes d'informations de positionnement relatives à une WTRU cible (104) sélectionnée à partir d'un réseau de communication sans fil (100) et pour recevoir des signaux de la WTRU cible (104) sélectionnée en réponse aux demandes reçues ;
un processeur (118) configuré pour procéder à des mesures de position relatives à la WTRU cible (104) basées sur des signaux reçus de la WTRU cible (104) afin de procéder aux mesures de position ;
un émetteur configuré pour transmettre des résultats de mesures de position relatives à la WTRU cible (104) au réseau sans fil (100) ; et
une mémoire (122) pour stocker le nombre d'instances où des informations de positionnement sont fournies au système.

7. WTRU selon la revendication 6 comprenant en outre un commutateur (126) pour activer et désactiver la capacité de ladite WTRU à répondre aux demandes de positionnement reçues du système.

8. WTRU selon la revendication 6 comprenant en outre un écran (124) pour afficher le nombre d'instances où des informations de positionnement sont fournies au système.
